Europäisches Patentamt

European Patent Office

Office européen des brevets

(11) Veröffentlichungsnummer: **0 344 393**
**A2**

(12) **EUROPÄISCHE PATENTANMELDUNG**

(21) Anmeldenummer: 89100383.2

(22) Anmeldetag: 11.01.89

(51) Int. Cl.⁴: **G01F 13/00 , G01G 11/08 , G01G 13/24**

(30) Priorität: 30.05.88 DE 3818338

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: **CARL SCHENCK AG**
**Landwehrstrasse 55 Postfach 40 18**
**D-6100 Darmstadt(DE)**

(72) Erfinder: **Beth, Matthias**
**Sandgasse 96**
**D-6103 Griesheim(DE)**
Erfinder: **Binz, Hansgeorg, Dr.**
**Langer Weg 52**
**D-6236 Eschborn(DE)**
Erfinder: **Törner, Ludger, Ing. grad.**
**Kettelerstrasse 23**
**D-6116 Eppertshausen(DE)**

(74) Vertreter: **Brandt, Ernst-Ulrich**
**Fa. Carl Schenck AG Patentabteilung**
**Landwehrstrasse 55 Postfach 40 18**
**D-6100 Darmstadt 1(DE)**

(54) **Dosiervorrichtung für die Feindosierung von Schüttgut.**

(57) Eine Dosiervorrichtung für die Feindosierung von insbesondere pulverförmigem oder feinkörnigem Schüttgut, mit einem Behälter oder Gehäuse (1) für das Schüttgut (3), einem angetriebenen Drehteller (4), auf den das Schüttgut aus dem Behälter aufgebracht wird und einem Abstreifer (7) zur Abführung des Schüttgutes vom Drehteller soll so ausgebildet werden, daß eine hohe Dosiergenauigkeit und eine gute Dosierkonstanz ermöglich wird. Dies wird dadurch erreicht, daß der Behälter (1) zylinderförmig ausgebildet ist und der Drehteller (4) den Behälter (1) von unten im wesentlichen abschließt. daß am Umfang bzw. Rand des Drehtellers eine nach außen offene Austragsnut (6) für das Schüttgut (3) angeordnet ist und daß der Abstreifer (7) in diese eingreift. Durch diese Anordnung ergibt sich eine eindeutig definierte Austragsrate, die sich durch die Drehzahl des Drehtellers auf einfache Weise für unterschiedliche Förderstärken einstellen läßt. Die Dosiervorrichtung ist zusammen mit einer Wägevorrichtung auch zur gravimetrischen Dosierung verwendbar.

Fig. 1

Xerox Copy Centre

# Dosiervorrichtung für die Feindosierung von Schüttgut

Die Erfindung betrifft eine Dosiervorrichtung für die Feindosierung von insbesondere pulverförmigem oder feinkörnigem Schüttgut, mit einem Behälter oder Gehäuse für das Schüttgut, einem angetriebenen Drehteller, auf den das Schüttgut aus dem Behälter aufgebracht wird und einem Abstreifer zur Abführung des Schüttgutes vom Drehteller bzw. aus dem Behälter.

Bei einer bekannten Puderfördervorrichtung mit einem drehenden Tisch und einem darüber angeordneten Speicherbehälter (DE-PS 26 36 521) sind mehrere Abstreifer vorgesehen, von denen einer (Grobabstreifer) eine gleichmäßige Schichtstärke auf dem drehenden Tisch erzeugt und wenigstens ein weiterer Abstreifer das auf eine gleichmäßige Schichtdicke gebrachte Material abstreift. Nachteilig bei dieser Anordnung ist, daß ein Grobabstreifer erforderlich ist und das von diesem abgestreifte Material wieder in den Behälter zurückgeführt werden muß. Darüber hinaus kann das Schüttgut möglicherweise vom Schüttkegel auf dem Drehteller direkt zum Dosierabstreifer fließen ohne vom Grobabstreifer erfaßt worden zu sein. Dies kann zu schwankenden Dosierströmen führen.

Andere bekannte Vorrichtungen für die Feindosierung von Schüttgütern (EP-B1-O 112 398) arbeiten mit Walzen, die um eine horizontal angeordnete Welle rotieren und in die Rillen eingearbeitet sind. Bei diesen Vorrichtungen besteht die Gefahr, daß das Schüttgut in der Rille zu sehr verdichtet wird oder daß es schwerkraftbedingt vorzeitig aus der Rille fällt, was jeweils zu einem ungleichmäßigen Austrag führt.

Die bekannten Vorrichtungen dienen zur volumetrischen Feindosierung von Schüttgut. Sie arbeiten im allgemeinen mit kleinen Förderstärken, die beispielsweise nur wenige Gramm pro Stunde betragen können. Drehteller bzw. Walzen laufen mit konstanter Geschwindigkeit bzw. Drehzahl

Es ist Aufgabe der vorliegenden Erfindung, die Nachteile des Standes der Technik zu vermeiden und eine Feindosiervorrichtung mit hoher Dosiergenauigkeit und Dosierkonstanz zu schaffen. Diese Aufgabe wird durch die in den Patentansprüchen angegebenen Merkmale gelöst. Die Ansprüche betreffen auch vorteilhafte Ausgestaltungen der Erfindung.

Durch die vorgeschlagene Ausbildung des angetriebenen Drehtellers mit einer Austragsnut für das zu dosierende Schüttgut ergibt sich eine eindeutig definierte Austragsrate, die sich durch die Drehzahl des Drehtellers auf einfache Weise für unterschiedliche Förderstärken einstellen läßt.

Durch die Anordnung eines Rührwerks im Behälter sowie durch die Anordnung von Umlenk- oder Leitelementen an der Innenseite des Behälters wird die gleichmäßige Füllung der Austragsnut verbessert.

Zur gravimetrischen Dosierung von Schüttgut kann die Dosiervorrichtung auf einer Wägevorrichtung angeordnet werden. Die Wägevorrichtung weist eine Regeleinrichtung zur Regelung des Antriebs bzw. der Drehzahl des Drehtellers auf. Auf diese Weise wird eine besonders genaue Gutdosierung ermöglicht.

Die Erfindung wird an Beispielen in der Zeichnung schematisch dargestellt und in der nachfolgenden Beschreibung näher erläutert. Es zeigen:

Fig. 1: einen Vertikalschnitt durch eine Dosiervorrichtung für die Feindosierung,

Fig. 2: Horizonalschnitte des Austragsbereichs,

Fig. 3: Vertikalschnitte des Austragsbereichs,

Fig. 4: Austragsbereich mit drehendem Abstreifer.

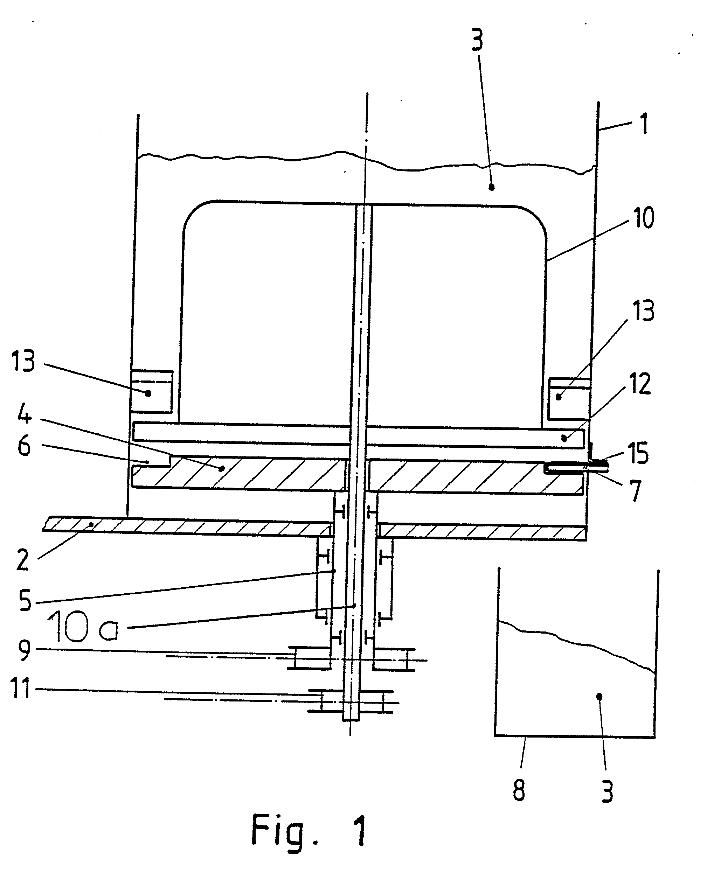

In Fig. 1 ist ein zylindrischer Behälter oder Gehäuse 1 auf einer Grundplatte 2 oder dergleichen befestigt. In den Behälter wird das zu dosierende Schüttgut 3 eingebracht. Am Boden des Behälters 1 ist ein Drehteller 4 angeordnet, der den Behälter für das Schüttgut nach unten abschließt. Der Drehteller ist an der Grundplatte 2 mit einer Hohlwelle 5 drehbar gelagert und wird über einen schematisch angedeuteten Antrieb 9 mit niedriger Drehzahl, die im allgemeinen nur wenige Umdrehungen pro Minute beträgt, angetrieben.

An der Außenseite bzw. am Rand des Drehtellers 4 ist eine Austragsnut 6 angeordnet, in die ein z. B. am Behälter 1 befestigter Abstreifer 7 eingreift. Durch den Abstreifer wird das zu dosierende Schüttgut bei Betrieb der Vorrichtung aus der Austragsnut 6 bzw. aus dem Behälter durch einen Schlitz 15 im Behälter nach außen in einen Auffangbehälter 8 oder dergleichen abgeführt.

Durch die Hohlwelle 5 des Drehtellers 4 verläuft eine Antriebswelle 10 a für ein Rührwerk 10, das durch einen Antrieb 11 angetrieben wird. Das Rührwerk 10 läuft bei gleicher Drehrichtung schneller um als der Drehteller 4. Es kann auch mit entgegengesetzter Drehrichtung zum Drehteller 4 betrieben werden. Das Rührwerk 10 weist mehrere Rührwerksflügel 12 auf, die vorzugsweise unmittelbar über dem Drehteller 4 angeordnet sind. An der Innenwand des Behälters 1 können mehrere keilförmige Umlenk- oder Leitelemente 13 angeordnet sein, die sich im wesentlichen über die Breite der Austragsnut 6 erstrecken. Sie wirken mit den Rührwerksflügeln 12 zusammen und sorgen für eine gleichmäßige Füllung der Austragsnut.

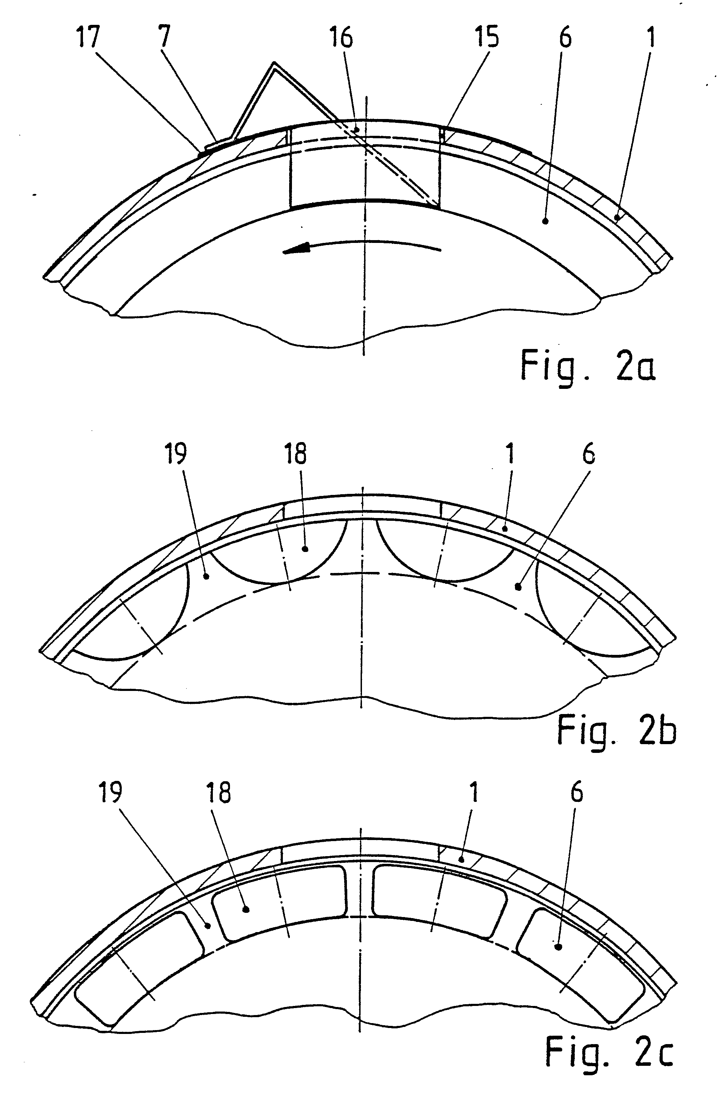

In Fig. 2 sind Ausschnitte (Horizontalschnitte) aus dem Behälter 1 im Austragsbereich der Vorrichtung, d. h. im Bereich des Abstreifers, dargestellt. Fig. 2 a zeigt den Abstreifer 7, der durch den Schlitz 15 in der Behälterwand des Behälters 1 in die Austragsnut 6 eingreift. Der Abstreifer ist im Bereich des Schlitzes 15 durch ein dünnes Abdeckblech 16 von oben abgedeckt. Das Abdeckblech 16 reicht bis an die Innenkante der Austragsnut 6. Es verhindert, daß Schüttgut durch den Abstreifer 7 unkontrolliert aus dem Behälter 1 ausgetragen wird. Der Abstreifer 7 und das Abdeckblech 16 sind durch einen Halter 17 am Behälter 1 befestigt.

Der Abstreifer 7 kann auch gekrümmt ausgebildet sein und pflugartig in die Austragsnut 6 eingreifen. Der Abstreifer kann starr oder elastisch sein. Die Drehrichtung des Drehtellers 4 ist durch einen Pfeil angegeben.

In Fig. 2 b und 2 c sind verschiedene Abdeckungen der Austragsnut 6 dargestellt. Die Abdeckungen 19 können z. B. halbkreisförmige Öffnungen 18 (Fig. 2 b) oder schlitz- oder rechteckförmige Öffnungen bzw. Durchbrüche 18 (Fig. 2 c) für den Durchtritt des Schüttgutes aus dem Behälter 1 in die Austragsnut 6 aufweisen. Die Abdeckung der Austragsnut 6 kann z. B. aus einem dünnen Blech bestehen. Durch die Abdeckung wird eine Verdichtung des Schüttgutes in der Austragsnut vermieden und die Dosiergenauigkeit verbessert.

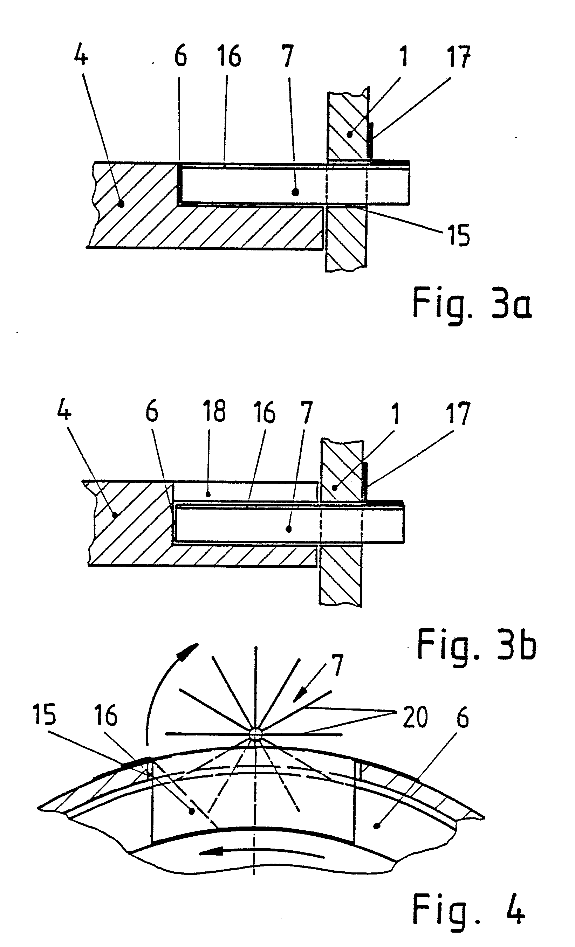

Fig. 3 zeigt unterschiedliche Ausbildungen der Austragsnut 6 im Vertikalschnitt. In Fig. 3 a ist der Drehteller 4 mit Austragsnut 6 erkennbar, in die der Abstreifer 7 eingreift. Der Austragsbereich ist durch das Abdeckblech 16 abdeckt. Die Austragsnut 6 weist eine rechteckige, quadratische oder andere geeignete Querschnittsform auf. Der Abstreifer ist an die Form der Austragsnut angepaßt.

Fig. 3 b zeigt ein Ausführungsbeispiel, bei dem die Austragsnut 6 vom Umfang des Drehtellers 4 her in diesen eingearbeitet ist. Im Bereich der Austragsnut sind im Drehteller Öffnungen oder Durchbrüche 18 für den Durchtritt des Schüttgutes in die Austragsnut vorgesehen, z. B. nach Fig. 2 b und 2 c. Die Durchbrüche können auch kreisförmig ausgebildet sein oder eine andere Form aufweisen.

In Fig. 4 ist ein drehend angeordneter Abstreifer dargestellt. Der Abstreifer 7 weist stern- oder flügelförmig angeordnete Abstreifelemente 20 auf, die durch den Schlitz 15 in der Behälterwand in die Austragsnut 6 eingreifen. Über dem Abstreifer ist ein Abdeckblech 16 angeordnet. Der Antrieb des Abstreifers ist nicht dargestellt.

Die beschriebene Dosiervorrichtung kann zusammen mit einer Wägevorrichtung auch zur gravimetrischen Dosierung verwendet werden. Hierbei wird die Dosiervorrichtung auf der Wägevorrichtung angeordnet. Die Wägevorrichtung weist in bekannter Weise eine Auswerteeinrichtung sowie eine Regeleinrichtung auf, mit deren Hilfe die Drehzahl des Drehtellers geregelt wird.

## Ansprüche

1. Dosiervorrichtung für die Feindosierung von insbesondere pulverförmigem oder feinkörnigem Schüttgut, mit einem Behälter oder Gehäuse für das Schüttgut, einem angetriebenen Drehteller, auf den das Schüttgut aus dem Behälter aufgebracht wird und einem Abstreifer zur Abführung des Schüttgutes vom Drehteller, dadurch gekennzeichnet, daß der Behälter (1) zylinderförmig ausgebildet ist und der Drehteller (4) den Behälter (1) nach unten im wesentlichen abschließt, daß am Umfang bzw. Rand des Drehtellers (4) eine nach außen offene Austragsnut (6) für das Schüttgut (3) angeordnet ist und daß der Abstreifer (7) in die Austragsnut eingreift.

2. Dosiervorrichtung nach Anspruch 1, dadurch gekennzeichnet, daß die Austragsnut (6) einen rechteckigen Querschnitt aufweist.

3. Dosiervorrichtung nach Anspruch 1 oder 2, dadurch gekennzeichnet, daß die Austragsnut (6) nach oben abgedeckt ist und daß in der Abdeckung (19) Öffnungen, Ausnehmungen oder Durchbrüche (18) vorgesehen sind, die insbesondere kreisförmig, halbkreisförmig, rechteckig oder ähnlich ausgebildet sind.

4. Dosiervorrichtung nach einem der vorhergehenden Ansprüche, dadurch gekennzeichnet, daß über dem Abstreifer (7) ein Abdeckblech (16) angeordnet ist.

5. Dosiervorrichtung nach einem der vorhergehenden Ansprüche, dadurch gekennzeichnet, daß der Abstreifer (7) starr oder elastisch ausgebildet ist.

6. Dosiervorrichtung nach einem der vorhergehenden Ansprüche, dadurch gekennzeichnet, daß im Behälter (1) ein Rührwerk (10) mit vertikaler Achse und horizontalen Rührwerksflügeln (12) angeordnet ist.

7. Dosiervorrichtung nach Anspruch 6, dadurch gekennzeichnet, daß an der Innenseite des Behälters (1) unmittelbar über der Ebene der Rührwerksflügel (12) Umlenk- oder Leitelemente (13) angeordnet sind, die mit den Rührwerksflügeln (12) zusammenwirken.

8. Dosiervorrichtung nach einem der vorhergehenden Ansprüche, dadurch gekennzeichnet, daß der Abstreifer (7) drehend ausgebildet ist und stern- oder flügelförmige Abstreifelemente (19) aufweist.

9. Dosiervorrichtung nach einem der vorhergehenden Ansprüche, dadurch gekennzeichnet, daß zur gravimetrischen Dosierung eine Wägevorrichtung zur Aufnahme der Dosiervorrichtung vorgesehen ist und daß die Wägevorrichtung eine Auswerteeinrichtung sowie eine Regeleinrichtung für die Regelung des Antriebs (9) des Drehtellers (4) aufweist.

Fig. 1

Fig. 2a

Fig. 2b

Fig. 2c

EP 0 344 393 A2

Fig. 3a

Fig. 3b

Fig. 4